# EUROPÄISCHE PATENTSCHRIFT

(11) **EP 3 670 949 B1**
(45) Veröffentlichungstag und Bekanntmachung des Hinweises auf die Patenterteilung: **11.08.2021**
(21) Anmeldenummer: 19215486.2
(22) Anmeldetag: 12.12.2019
(51) Int. Cl.: F16C 41/00, F16C 17/04

(54) **ANORDNUNG ZUR HERSTELLUNG EINER ELEKTRISCH LEITFÄHIGEN VERBINDUNG**
ARRANGEMENT FOR THE ESTABLISHMENT OF AN ELECTRICALLY CONDUCTIVE CONNECTION
ARRANGEMENT POUR UNE CONNECTION ELECTRIQUEMENT CONDUCTRICE

(30) Priorität: 21.12.2018 DE 102018133343; 17.05.2019 DE 102019113039
(43) Veröffentlichungstag der Anmeldung: 24.06.2020
(73) Patentinhaber: Carl Freudenberg KG, 69469 Weinheim (DE)
(72) Erfinder: Colineau, Francois, 69469 Weinheim (DE); Menzel, Tobias, 69493 Hirschberg (DE); Wendel, Vincent, 69483 Wald-Michelbach (DE); STEPHAN, Ingo, 64668 Rimbach (DE); Klenk, Thomas, 69221 Dossenheim (DE)

(56) Entgegenhaltungen:
- EP-A1- 3 537 011
- EP-A1- 3 537 012
- EP-A1- 3 633 243
- EP-A1- 3 633 244
- EP-A1- 3 646 436
- DE-A1-102013 000 982
- DE-A1-102014 010 269
- DE-A1-102017 004 061
- FR-A1- 2 913 543

## Beschreibung

Die Erfindung betrifft eine Anordnung, umfassend ein Welle, ein Gehäuse sowie eine Einrichtung zur Herstellung einer elektrisch leitfähigen Verbindung zwischen der Welle und dem Gehäuse.

Aus der DE 10 2013 000 982 A1 ist eine Dichtung bekannt, umfassend einen Dichtring mit zumindest einer dynamisch beanspruchten Dichtlippe und einer Vorschaltdichtung. Die Vorschaltdichtung ist mit axialem Abstand benachbart zur Dichtlippe angeordnet und besteht aus einem elektrisch leitfähigen Werkstoff.

Die Dichtlippe und die Vorschaltdichtung umschließen dichtend eine abzuschließende Oberfläche eines ersten Maschinenelementes. Dabei ist das erste Maschinenelement mit radialem Abstand benachbart zu einem zweiten Maschinenelement angeordnet. In dem durch den radialen Abstand gebildeten Spalt sind der Dichtring und die Vorschaltdichtung angeordnet. Das erste Maschinenelement und das zweite Maschinenelement sind durch die Vorschaltdichtung elektrisch leitend miteinander verbunden. Dabei berührt die Vorschaltdichtung sowohl das erste Maschinenelement als auch das zweite Maschinenelement anliegend. Die Vorschaltdichtung ist als Potentialausgleichsring ausgebildet und besteht aus einem elektrisch leitfähigen, mit PTFE imprägnierten Vliesstoff.

Die Vorschaltdichtung bewirkt einen Potentialausgleich zwischen den beiden Maschinenelementen und verhindert mechanische Beschädigungen, die entstehen können, wenn unterschiedlich große elektrische Potentiale der Maschinenelemente durch einen elektrischen Spannungsdurchschlag ausgeglichen werden. Ein Spannungsdurchschlag kann einen Materialabtrag an dem Maschinenelement mit relativ geringer Ladung bewirken und eine Veränderung des Materialgefüges in dem Bereich, in dem der Spannungsdurchschlag erfolgt, verursachen.

Bei der vorbekannten Dichtung ist das elektrisch leitfähige Element für den Potentialausgleich einer Dichtung zugeordnet, so dass eine Montage im Bereich am Übergang zur Umgebung, beispielsweise im Bereich des Wellenaustritts einer Welle aus einem Gehäuse erfolgt.

Der Erfindung liegt die Aufgabe zugrunde, eine Anordnung bereitzustellen, welche eine einfache und kostengünstige elektrisch leitfähige Verbindung zwischen einer Welle und einem Gehäuse herstellt.

Diese Aufgabe wird mit den Merkmalen von Anspruch 1 gelöst. Auf vorteilhafte Ausgestaltungen nehmen die Unteransprüche Bezug.

Die erfindungsgemäße Anordnung umfasst eine Welle, ein Gehäuse sowie eine Einrichtung zur Herstellung einer elektrisch leitfähigen Verbindung zwischen der Welle und dem Gehäuse, wobei die Einrichtung einen Haltekörper aufweist, wobei der Haltekörper zumindest eine elektrisch leitfähige Scheibe aufnimmt, wobei die Scheibe die Welle und das Gehäuse kontaktiert. Dabei ist der Haltekörper so ausgebildet, dass der Haltekörper mit elektrisch leitfähiger Scheibe beispielsweise auch im Inneren eines Gehäuses angeordnet sein kann und dort eine elektrisch leitfähige Verbindung zwischen Welle und Gehäuse herstellt.

Die Scheibe kann aus elektrisch leitfähigem Vliesstoff ausgebildet sein. Vorzugsweise ist die Scheibe mit einer PTFE-Dispersion getränkt. Die PTFE-Dispersion stabilisiert den Vliesstoff und reduziert den Reibwert gegenüber der Welle. Dadurch verlängert sich die Gebrauchsdauer der Scheibe.

Die Scheibe enthält vorzugsweise elektrisch leitfähige Partikel in Form von Kohlenstofffasern. Dabei kann die Matrix der Scheibe aus Kohlenstofffasern ausgebildet sein. Alternativ können die Kohlenstofffasern zumindest teilweise eine Umhüllung aus metallischem Werkstoff aufweisen. Gemäß einer weiteren vorteilhaften Ausgestaltung enthält die Scheibe metallische Fasern. Weitere vorteilhafte elektrisch leitfähige Partikel können aus Leitruß oder Metallpartikeln bestehen. Der elektrisch leitfähige Vliesstoff kann ferner Kunststofffasern umfassen, welche zusätzlich oder statt der elektrisch leitfähigen Fasern die Matrix des Vliesstoffes bilden.

Der Haltekörper kann in Form einer Buchse ausgebildet sein und eine Bohrung aufweisen, durch welche die Welle hindurchragt. Dabei ist die Buchse auf die Welle aufgeschoben und nimmt die elektrisch leitfähige Scheibe auf, welche wiederum die Welle und das Gehäuse elektrisch leitend kontaktiert. Gemäß einer ersten Ausgestaltung kann die Buchse derart ausgebildet sein, dass diese drehfest zum Gehäuse ist und mit der Welle rotiert. Gemäß einer zweiten Ausgestaltung kann die Buchse derart ausgebildet sein, dass diese drehfest der Welle zugeordnet ist und relativ zum Gehäuse rotiert. Gemäß einer dritten Ausgestaltung kann die Buchse schwimmend zwischen Gehäuse und Welle angeordnet und dementsprechend gegenüber Gehäuse und Welle drehbar sein.

Der Haltekörper weist entlang einer Stirnseite erste Formschlusselemente auf und die Scheibe weist zweite Formschlusselemente auf, wobei die zweiten Formschlusselemente in die ersten Formschlusselemente eingreifen. Dadurch ergibt sich ein formschlüssiger Verbund zwischen Haltekörper und Scheibe, so dass die Scheibe sicher an dem Haltekörper festgelegt ist. Dabei ist es denkbar, die formschlüssige Verbindung zwischen Haltekörper und Scheibe über eine Klettverbindung zu verwirklichen. Ferner kann die Scheibe mittels einer Nietverbindung an dem Haltekörper festgelegt sein. Die Scheibe kann auch mittels einer Klipsverbindung oder einer Knöpfverbindung an dem Haltekörper fixiert sein.

Der Haltekörper kann in Form eines Nutrings ausgebildet sein. In diesem Zusammenhang ist es besonders vorteilhaft, wenn die Scheibe im Bereich des Außenumfangs gezackt ist. Ist der Haltekörper in Form eines Nutrings ausgebildet, weist dieser in axialer Richtung hervorstehende und zurückspringende Bereiche auf, so dass der Haltekörper eine gezackte Stirnseite aufweist. In die zurückstehenden Bereiche greifen die radial nach Außen hervorstehenden Bereiche der Scheibe ein, so dass sich hieraus ein formschlüssiger Verbund zwischen Haltekörper und Scheibe ergibt. Insofern bilden die axial aus dem Haltekörper hervorstehenden und zurückstehenden Bereiche erste Formschlusselemente und die radial hervor- und zurückstehenden Bereiche bilden zweite Formschlusselemente.

Die Scheibe kann über zumindest eine Klemmscheibe an dem Haltekörper festgelegt sein. Dabei kann die Klemmscheibe mit der zuvor beschriebenen Formschlussgeometrie, also mit zweiten Formschlusselementen, versehen sein. Dabei kann die Klemmscheibe aus metallischem Material bestehen, was eine besonders feste Fixierung der Scheibe an dem Haltekörper ermöglicht.

Je nach Anforderung in Bezug auf die elektrische Leitfähigkeit ist es denkbar, mehrere elektrisch leitfähige Scheiben vorzusehen, welche die Welle und das Gehäuse elektrisch leitend kontaktieren. Dabei kann zwischen den Scheiben jeweils eine Klemmscheibe angeordnet sein, welche eine sichere Fixierung der Scheiben an dem Haltekörper gewährleisten.

Die Scheibe liegt vorzugsweise mit elastischer Vorspannung an der Welle an. Dadurch ist eine sichere elektrische Kontaktierung zwischen Scheibe und Welle gegeben.

Gemäß einer ersten Ausgestaltung kann die Scheibe an das Gehäuse angepresst sein. Bei dieser Ausgestaltung weist das Gehäuse beispielsweise eine umlaufende Schulter auf, an welche sich die Scheibe anlegt. Dabei kann die Scheibe über ein Fixiermittel an die Schulter angepresst werden, so dass sich auch hier eine sichere elektrische Kontaktierung ergibt. Gemäß einer alternativen Ausgestaltung liegt die Scheibe mit elastischer Vorspannung an dem Gehäuse an. In diesem Fall ist die Scheibe mit einem Übermaß hergestellt, wobei der Durchmesser des zentral in die Scheibe eingebrachten Durchbruchs, durch welchen die Welle hindurchragt, kleiner ist als der Wellendurchmesser und der Außendurchmesser der Scheibe größer ist als der Innendurchmesser der Gehäusebohrung, in welcher die Scheibe aufgenommen ist. In diesem Fall ist gewährleistet, dass die elektrisch leitfähige Scheibe sowohl an der Welle als auch an dem Gehäuse anliegt.

Der Haltekörper kann an zumindest einer Stirnseite mit einer hydrodynamischen Struktur versehen sein. Dazu kann der Haltekörper stirnseitig, beispielsweise mit Flügeln oder Lamellen versehen sein, welche bei einer Relativbewegung einen Förderstrom erzeugen und so einen Fördermittelstrom beispielsweise von abzudichtendem Schmiermittel bewirken. Dies ist insbesondere dann vorteilhaft, wenn der Haltekörper mit Scheibe im Inneren eines Gehäuses angeordnet ist und die Verteilung des Schmiermittels im Inneren des Gehäuses gewährleistet sein soll.

Die Einrichtung kann zwischen einem ersten Lager und einem zweiten Lager angeordnet sein, wobei über das erste Lager und das zweite Lager die Welle drehbar in dem Gehäuse gelagert ist. Mechanisch bedingt weisen die beiden Lager relativ zueinander einen Mindestabstand auf. Dadurch, dass die Einrichtung zwischen dem ersten Lager und dem zweiten Lager angeordnet ist, ergibt sich wiederum eine besonders kompakte Ausgestaltung der Anordnung, so dass diese nur einen geringen Stauraumbedarf hat.

Der Haltekörper kann aus Kunststoff ausgebildet sein. Vorzugsweise ist der Haltekörper aus einem spritzgießfähigen und zähharten Werkstoff ausgebildet, wie beispielsweise Polyamid. Ein derartig ausgebildeter Haltekörper ist einfach und kostengünstig herstellbar.

Einige Ausgestaltungen der erfindungsgemäßen Anordnung werden nachfolgend anhand der Figuren näher erläutert. Diese zeigen, jeweils schematisch:
- Fig. 1: im Detail eine Einrichtung als Explosionsdarstellung;
- Fig. 2: eine Anordnung mit einer Einrichtung und einer Welle im Schnitt in räumlicher Darstellung;
- Fig. 3: ein alternativ ausgestalteter Haltekörper;
- Fig. 4: ein weiterer alternativ ausgebildeter Haltekörper;
- Fig. 5: eine Anordnung.

Die Figuren zeigen eine Anordnung 1, umfassend eine Welle 2, ein Gehäuse 3 sowie eine Einrichtung 4 zur Herstellung einer elektrisch leitfähigen Verbindung zwischen der Welle 2 und dem Gehäuse 3. Die Anordnung 1 umfasst ferner ein erstes Lager 13 und ein zweites Lager 14, wobei über das erste Lager 13 und das zweite Lager 14 die Welle 2 drehbar in dem Gehäuse 3 gelagert ist. Die Einrichtung 4 ist zwischen dem ersten Lager 13 und dem zweiten Lager 14 angeordnet.

Der Haltekörper 5 nimmt eine elektrisch leitfähige Scheibe 6 auf, wobei die Scheibe 6 die Welle 2 und das Gehäuse 3 elektrisch leitend kontaktiert. Die Scheibe 6 ist aus elektrisch leitfähigem Vliesstoff ausgebildet. Die Matrix des Vliesstoffes besteht hierzu aus Kohlenstofffasern, welche mit einer PTFE-Dispersion stabilisiert sind.

Der Haltekörper 5 ist in Form einer Buchse ausgebildet und weist eine Bohrung 7 auf, durch welche die Welle 2 hindurchragt. Der buchsenförmige Haltekörper 5 ist derart ausgebildet, dass dieser drehfest zum Gehäuse 3 ist, wobei die Welle 2 relativ zu dem Haltekörper 5 rotiert. Der als Buchse ausgebildete Haltekörper 5 weist entlang einer Stirnseite 8 erste Formschlusselemente 9 auf. Diese sind in Form von in axialer Richtung ragenden Vorsprüngen ausgebildet. Insofern ist der Haltekörper 5 in Form eines Nutrings ausgebildet.

Der Haltekörper 5 besteht aus Kunststoff, in dieser Ausgestaltung aus Polyamid (PA).

Die in die Stirnseite 8 des Haltekörpers 5 eingebrachten Vorsprünge 16 weisen abgeschrägte Innenflanken auf. Dazu weiten sich die Vorsprünge 16 in Richtung des freien Endes auf und springen zumindest teilweise radial nach innen vor. Am Übergang zwischen den Vorsprüngen 16 und dem Haltekörper 5 befinden sich nutförmige Hinterschneidungen, welche sich radial nach außen erstrecken. Die Hinterschneidungen nehmen Abschnitte der Scheibe 6 auf und verriegeln diese formschlüssig an dem Haltekörper 5.

Die Scheibe 6 weist zweite Formschlusselemente 10 auf. Hierzu ist die Scheibe 6 im Bereich des Außenumfangs gezackt und weist dementsprechend Vorsprünge auf, welche sich in radialer Richtung erstrecken. Die zweiten Formschlusselemente 10 greifen in die ersten Formschlusselemente 9 ein.

Die Scheibe 6 ist über eine Klemmscheibe 11 an dem Haltekörper 5 festgelegt. Die Klemmscheibe 11 ist aus metallischem Werkstoff ausgebildet und weist ebenfalls zweite Formschlusselemente 10 auf, welche in Form von in radialer Richtung hervorstehenden Vorsprüngen gebildet ist. Die zweiten Formschlusselemente 10 der Klemmscheibe 11 greifen in die ersten Formschlusselemente 9 des Haltekörpers 5 ein.

Die Scheibe 6 liegt mit elastischer Vorspannung an der Welle 2 an. Des Weiteren liegt die Scheibe 6 auch mit elastischer Vorspannung an dem Gehäuse 3 an.

Der Haltekörper 5 ist an der anderen Stirnseite 12 mit einer hydrodynamischen Struktur in Form von Lamellen versehen.

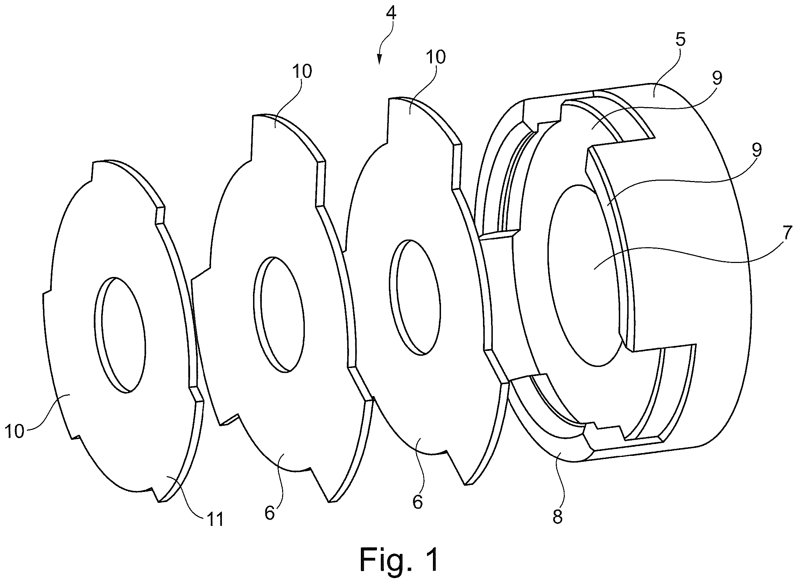

Figur 1 zeigt in räumlicher Darstellung und als Explosionsdarstellung im Detail eine erste Ausgestaltung einer Einrichtung 4 zur Herstellung einer elektrisch leitfähigen Verbindung zwischen der Welle 2 und dem Gehäuse 3. Die vorliegende Einrichtung 4 weist zwei Scheiben 6, 6' auf, welche zwischen dem Haltekörper 5 und der Klemmscheibe 11 angeordnet sind. Die Scheiben 6, 6' und die Klemmscheibe 11 sind formschlüssig an dem Haltekörper 5 festgelegt. Dazu ist der Haltekörper 5 in Form eines Nutrings ausgebildet und die Scheiben 6, 6' und die Klemmscheibe 11 weisen radial nach außen ragende Vorsprünge auf, welche kongruent zur Nutringgeometrie des Haltekörpers 5 ausgebildet sind.

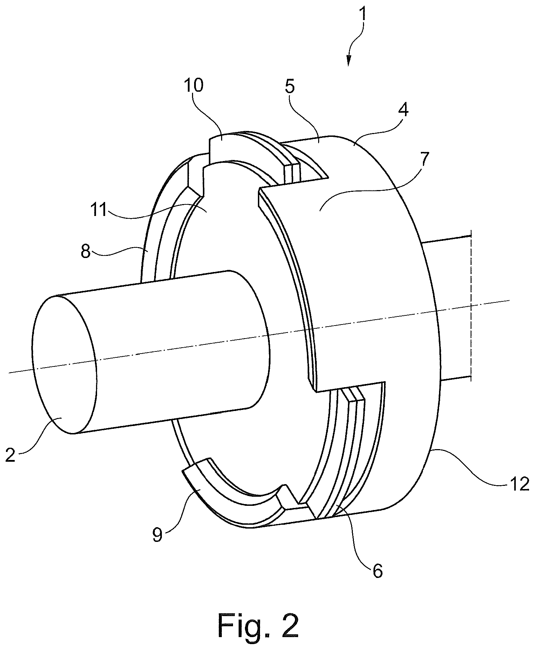

Figur 2 zeigt im Detail, im Schnitt und in räumlicher Darstellung die Anordnung 1 mit Welle 2 und Einrichtung 4. Bei der vorliegenden Ausgestaltung weist die Einrichtung 4 eine Scheibe 6 und eine Klemmscheibe 11 auf, welche formschlüssig an dem Haltekörper 5 verriegelt sind.

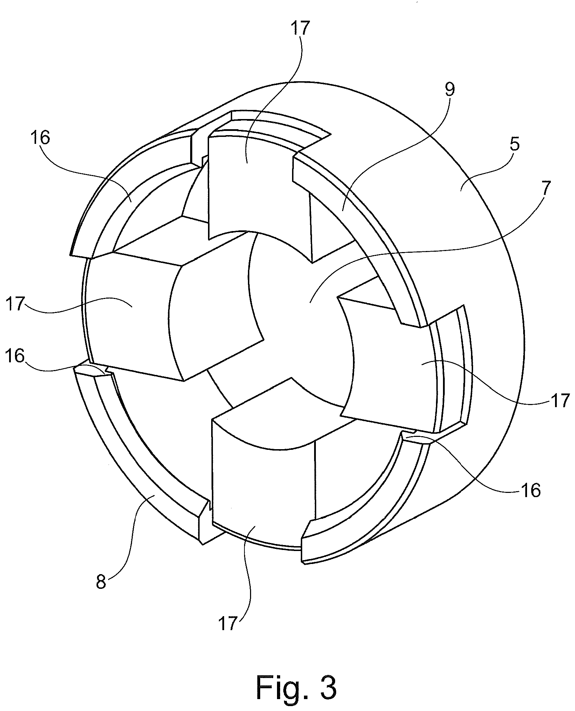

Figur 3 zeigt eine weitere Ausgestaltung des zuvor beschriebenen Haltekörpers 5. Bei der vorliegenden Ausgestaltung sind die Vorsprünge 16 segmentartig über den Umfang verteilt, wobei zwischen den Segmenten mit den Vorsprüngen 16 weitere Segmente angeordnet sind. Den weiteren Segmenten sind Radialvorsprünge 17 zugeordnet, welche radial nach innen vorstehen. Dabei bilden die Radialvorsprünge 17 an den inneren einander zugeordneten Enden die Aufnahme für die Welle 2 und begrenzen dementsprechend die Bohrung 7. Durch diese Ausgestaltung ist ein einfacheres Herstellen des Haltekörpers 5 im Spritzgießverfahren möglich.

Dadurch, dass die radial nach innen vorspringenden Bereiche benachbart zu den Vorsprüngen 16 mit den Hinterschnitten sind, ist ein leichteres Entformen des Haltekörpers 5 aus dem Spritzgusswerkzeug möglich. Der Haltekörper 5 besteht aus Kunststoff, in dieser Ausgestaltung aus Polyamid (PA).

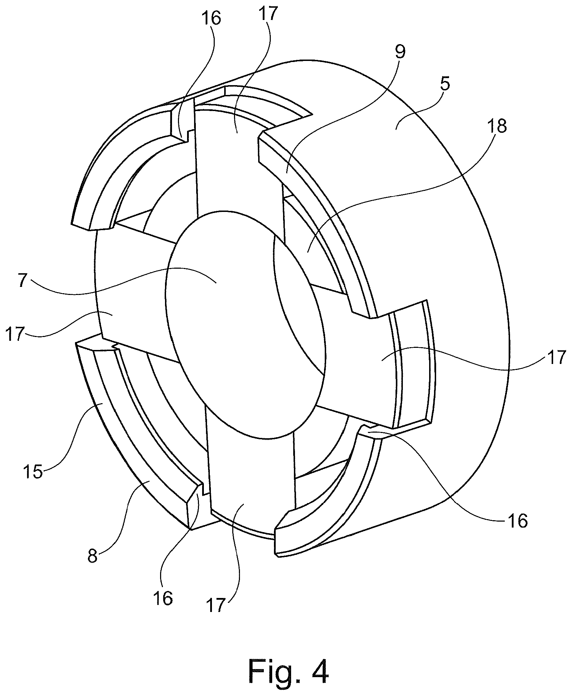

Figur 4 zeigt eine Weiterbildung des Haltekörpers 5 gemäß Figur 4, wobei bei der vorliegenden Ausgestaltung an den radial inneren Enden der Radialvorsprünge 17 ein Lagerring 18 mit einer Bohrung 7 zur Aufnahme der Welle 2 vorgesehen ist. Bei dieser Ausgestaltung weist der Haltekörper 5 einen Lagerring 18 und einen Außenring 15 auf, welche radial zueinander beabstandet sind.

Der Haltekörper 5 besteht aus Kunststoff, in dieser Ausgestaltung aus Polyamid (PA). Auch bei dieser Ausgestaltung ist ein einfaches Entformen aus einem Spritzgusswerkzeug möglich, weil ein Teil des Spritzgießwerkzeuges während der Herstellung in den Ringraum zwischen Lagerring 18 und Außenring 15 eingreifen kann.

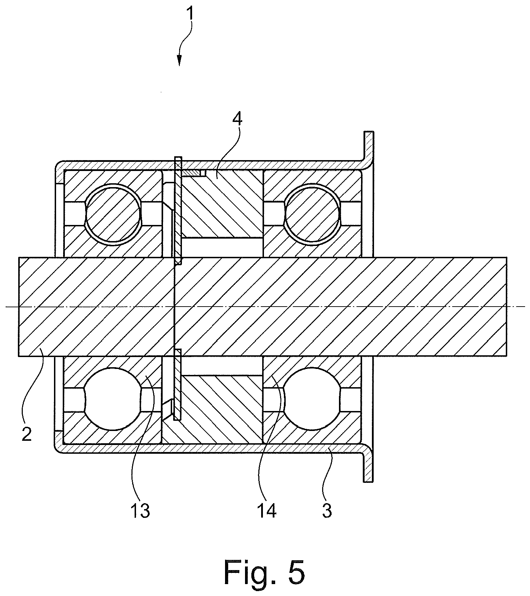

Figur 5 zeigt im Schnitt die Anordnung 1. Die Anordnung 1 bildet die Lagerung eines Gebläserades für eine Lüftung. Bei der vorliegenden Anordnung 1 bildet die Einrichtung 4 mit dem aus Kunststoff ausgebildeten Haltekörper 4 und der Scheibe 6 einen Abstandshalter zwischen dem ersten Lager 13 und dem zweiten Lager 14. Dabei liegen das erste Lager 13 und das zweite Lager 14 jeweils stirnseitig an der Einrichtung 4 an. Dadurch können Abstützungen in dem Gehäuse 3 entfallen und das Gehäuse 3 kann besonders einfach ausgebildet sein.

## Patentansprüche

1. Anordnung (1), umfassend eine Welle (2), ein Gehäuse (3) sowie eine Einrichtung (4) zur Herstellung einer elektrisch leitfähigen Verbindung zwischen der Welle (2) und dem Gehäuse (3), wobei die Einrichtung (4) einen Haltekörper (5) aufweist, wobei der Haltekörper (5) zumindest eine elektrisch leitfähige Scheibe (6) aufnimmt, wobei die Scheibe (6) die Welle (2) und das Gehäuse (3) kontaktiert, **dadurch gekennzeichnet, dass** der Haltekörper (5) entlang einer Stirnseite (8) erste Formschlusselemente (9) aufweist und dass die Scheibe (6) zweite Formschlusselemente (10) aufweist, wobei die zweiten Formschlusselemente (10) in die ersten Formschlusselemente (9) eingreifen.

2. Anordnung nach Anspruch 1, **dadurch gekennzeichnet, dass** die Scheibe (6) aus elektrisch leitfähigem Vliesstoff ausgebildet ist.

3. Anordnung nach Anspruch 1 oder 2, **dadurch gekennzeichnet, dass** der Haltekörper (5) in Form einer Buchse ausgebildet ist und eine Bohrung (7) aufweist, durch welche die Welle (2) hindurch ragt.

4. Anordnung nach einem der Ansprüche 1 bis 3, **dadurch gekennzeichnet, dass** der Haltekörper (5) in Form eines Nutrings ausgebildet ist.

5. Anordnung nach einem der Ansprüche 1 bis 4, **dadurch gekennzeichnet, dass** die Scheibe (6) im Bereich des Außenumfangs gezackt ist.

6. Anordnung nach einem der Ansprüche 1 bis 5, **dadurch gekennzeichnet, dass** die Scheibe (6) über zumindest eine Klemmscheibe (11) an dem Haltekörper (5) festgelegt ist.

7. Anordnung nach einem der Ansprüche 1 bis 6, **dadurch gekennzeichnet, dass** die Scheibe (6) mit elastischer Vorspannung an der Welle (2) anliegt.

8. Anordnung nach einem der Ansprüche 1 bis 7, **dadurch gekennzeichnet, dass** die Scheibe (6) an das Gehäuse (3) angepresst ist oder mit elastischer Vorspannung an dem Gehäuse (3) anliegt.

9. Anordnung nach einem der Ansprüche 1 bis 8, **dadurch gekennzeichnet, dass** der Haltekörper (5) an zumindest einer Stirnseite (12) mit einer hydrodynamischen Struktur versehen ist.

10. Anordnung nach einem der Ansprüche 1 bis 9, **dadurch gekennzeichnet, dass** die Einrichtung (4) zwischen einem ersten Lager (13) und einem zweiten Lager (14) angeordnet ist, wobei über das erste Lager (13) und das zweite Lager (14) die Welle (2) drehbar in dem Gehäuse (3) gelagert ist.

11. Anordnung nach einem der Ansprüche 1 bis 10, **dadurch gekennzeichnet, dass** der Haltekörper (5) aus Kunststoff ausgebildet ist.

## Claims

1. Assembly (1) comprising a shaft (2), a housing (3), and an installation (4) for producing an electrically conductive connection between the shaft (2) and the housing (3), wherein the installation (4) has a retaining member (5), wherein the retaining member (5) receives at least one electrically conductive disc (6), wherein the disc (6) contacts the shaft (2) and the housing (3), **characterized in that** the retaining member (5) along an end side (8) has first form-fit elements (9), and **in that** the disc (6) has second form-fit elements (10), wherein the second form-fit elements (10) engage in the first form-fit elements (9).

2. Assembly according to Claim 1, **characterized in that** the disc (6) is configured from an electrically conductive non-woven material.

3. Assembly according to Claim 1 or 2, **characterized in that** the retaining member (5) is configured in the form of a bushing and has a bore (7), the shaft (2) protruding through the latter.

4. Assembly according to one of Claims 1 to 3, **characterized in that** the retaining member (5) is configured in the form of a grooved ring.

5. Assembly according to one of Claims 1 to 4, **characterized in that** the disc (6) is serrated in the region of the external circumference.

6. Assembly according to one of Claims 1 to 5, **characterized in that** the disc (6) is established on the retaining member (5) by way of at least one washer disc (11).

7. Assembly according to one of Claims 1 to 6, **characterized in that** the disc (6) bears on the shaft (2) while being elastically pre-loaded.

8. Assembly according to one of Claims 1 to 7, **characterized in that** the disc (6) is pressed against the housing (3) or bears on the housing (3) while being elastically pre-loaded.

9. Assembly according to one of Claims 1 to 8, **characterized in that** the retaining member (5) on at least one end side (12) is provided with a hydrodynamic structure.

10. Assembly according to one of Claims 1 to 9, **characterized in that** the installation (4) is disposed between a first bearing (13) and a second bearing (14), wherein the shaft (2) is mounted in the housing (3) so as to be rotatable by way of the first bearing (13) and the second bearing (14).

11. Assembly according to one of Claims 1 to 10, **characterized in that** the retaining member (5) is configured from plastics material.

## Revendications

1. Agencement (1), comprenant un arbre (2), un boîtier (3), ainsi qu'un dispositif (4) pour la production d'une liaison électriquement conductrice entre l'arbre (2) et le boîtier (3), le dispositif (4) comprenant un corps de retenue (5), le corps de retenue (5) recevant au moins un disque électriquement conducteur (6), le disque (6) venant en contact avec l'arbre (2) et le boîtier (3), **caractérisé en ce que** le corps de retenue (5) comprend des premiers éléments de complémentarité de forme (9) le long d'un côté frontal (8) et **en ce que** le disque (6) comprend des deuxièmes éléments de complémentarité de forme (10), les deuxièmes éléments de complémentarité de forme (10) pénétrant dans les premiers éléments de complémentarité de forme (9).

2. Agencement selon la revendication 1, **caractérisé en ce que** le disque (6) est formé de non-tissé électriquement conducteur.

3. Agencement selon la revendication 1 ou 2, **caractérisé en ce que** le corps de retenue (5) est configuré sous la forme d'une douille et comprend un alésage (7), à travers lequel l'arbre (2) fait saillie.

4. Agencement selon l'une quelconque des revendications 1 à 3, **caractérisé en ce que** le corps de retenue (5) est configuré sous la forme d'un joint en U à lèvre.

5. Agencement selon l'une quelconque des revendications 1 à 4, **caractérisé en ce que** le disque (6) est dentelé dans la zone de la circonférence extérieure.

6. Agencement selon l'une quelconque des revendications 1 à 5, **caractérisé en ce que** le disque (6) est fixé au corps de retenue (5) par l'intermédiaire d'au moins un disque de serrage (11).

7. Agencement selon l'une quelconque des revendications 1 à 6, **caractérisé en ce que** le disque (6) repose avec une précontrainte élastique sur l'arbre (2) .

8. Agencement selon l'une quelconque des revendications 1 à 7, **caractérisé en ce que** le disque (6) est pressé sur le boîtier (3) ou repose avec une précontrainte élastique sur le boîtier (3).

9. Agencement selon l'une quelconque des revendications 1 à 8, **caractérisé en ce que** le corps de retenue (5) est muni d'une structure hydrodynamique sur au moins un côté frontal (12).

10. Agencement selon l'une quelconque des revendications 1 à 9, **caractérisé en ce que** le dispositif (4) est agencé entre un premier palier (13) et un deuxième palier (14), l'arbre (2) étant monté rotatif dans le boîtier (3) par l'intermédiaire du premier palier (13) et du deuxième palier (14).

11. Agencement selon l'une quelconque des revendications 1 à 10, **caractérisé en ce que** le corps de retenue (5) est formé en matière plastique.
